# EUROPÄISCHE PATENTANMELDUNG

(11) **EP 3 690 563 A1**
(43) Veröffentlichungstag der Anmeldung: **05.08.2020**
(21) Anmeldenummer: 19154247.1
(22) Anmeldetag: 29.01.2019
(51) Int. Cl.: G05B 19/042, G05B 19/05, G06F 9/48

(54) **VERTEILUNG EINER STEUERAUFGABE AUF MEHRERE PROZESSORKERNE**

(71) Anmelder: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(57) **Zusammenfassung**

Eine Steuereinrichtung (2) steuert und kontrolliert einen industriellen technischen Prozess (1). Die zugehörige Steueraufgabe (6) weist Tasks (7) auf, denen Prioritäten zugeordnet sind. Eine Task (7a) ist eine zyklisch ausgeführte Basistask (7a). Die anderen Tasks (7b bis 7f) sind getriggerte Tasks (7b bis 7f), die bei Eintreten einer jeweiligen Startbedingung jeweils einmal ausgeführt werden. Die Steuereinrichtung (2) nimmt im Rahmen eines jeweiligen Zyklus der Basistask (7a) Eingangsdaten (E) des industriellen technischen Prozesses (1) entgegen, ermittelt unter deren Verwertung Basis-Ausgangsdaten (A) und gibt diese an den industriellen technischen Prozess (1) aus. Die Steuereinrichtung (2) ermittelt im Rahmen der getriggerten Tasks (7b bis 7f) mit oder ohne Entgegennahme von Eingangsdaten (E') des industriellen technischen Prozesses (1) Zusatz-Ausgangsdaten (A') und gibt sie an den industriellen technischen Prozess (1) aus. Die Tasks (7) werden auf mehrere Prozessorkerne (3) der Steuereinrichtung (2) verteilt. Die Prozessorkerne (3) prüfen ab dem Starten eines Zyklus der Basistask (7a) jeweils, ob mindestens eine von ihnen ausführbare getriggerte Task (7b bis 7f) zur Ausführung freigegeben ist. Je nach Ergebnis der Prüfung führen sie eine von ihnen ausführbare getriggerte Task (7b bis 7f), den jeweiligen Zyklus der Basistask (7a) oder keinen Task (7) aus. Der die Basistask (7a) ausführende Prozessorkern (3a) unterbricht die Ausführung der Basistask (7a) mit dem Abschluss des jeweiligen Zyklus der Basistask (7a), bis alle anderen Prozessorkerne (3b) keine getriggerte Task (7b bis 7f) mehr ausführen. Erst dann startet er die Ausführung des nächsten Zyklus der Basistask (7a).

## Beschreibung

Die vorliegende Erfindung geht aus von einem Steuerverfahren für einen industriellen technischen Prozess,
- wobei eine Steuereinrichtung für den industriellen technischen Prozess den industriellen technischen Prozess gemäß einer Steueraufgabe steuert und kontrolliert,
- wobei die Steueraufgabe mehrere Tasks aufweist, denen jeweils eine Priorität zugeordnet ist,
- wobei eine der Tasks eine Basistask und die anderen Tasks getriggerte Tasks sind,
- wobei die Basistask zyklisch ausgeführt wird und die getriggerten Tasks aufgrund des Eintretens einer jeweiligen Startbedingung jeweils zur einmaligen Ausführung freigegeben werden und danach jeweils einmal ausgeführt werden,
- wobei die Steuereinrichtung im Rahmen eines jeweiligen Zyklus der Basistask Eingangsdaten des industriellen technischen Prozesses entgegennimmt, unter Verwertung der Eingangsdaten Basis-Ausgangsdaten für den industriellen technischen Prozess ermittelt und die Basis-Ausgangsdaten an den industriellen technischen Prozess ausgibt,
- wobei die Steuereinrichtung im Rahmen der getriggerten Tasks mit oder ohne Entgegennahme von Eingangsdaten des industriellen technischen Prozesses Zusatz-Ausgangsdaten für den industriellen technischen Prozess ermittelt und die Zusatz-Ausgangsdaten an den industriellen technischen Prozess ausgibt.

Die vorliegende Erfindung geht weiterhin aus von einem Steuerprogramm für eine Steuereinrichtung für einen industriellen technischen Prozess, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung ein derartiges Steuerverfahren ausführt.

Die vorliegende Erfindung geht weiterhin aus von einer Steuereinrichtung für einen industriellen technischen Prozess,
- wobei die Steuereinrichtung mit einem derartigen Steuerprogramm programmiert ist, so dass die Steuereinrichtung im Betrieb ein derartiges Steuerverfahren ausführt.

Der Einsatz von Prozessoren mit mehreren Prozessorkernen ist mittlerweile weit verbreitet und setzt sich auch in der Automatisierungstechnik immer mehr durch. Steuerungsprogramme sind jedoch in ihrer Struktur in der Regel zyklisch angelegt, d.h. der Programmcode wird fortlaufend wiederholt ausgeführt. Im Rahmen der Ausführung des Programmcodes nimmt die Steuereinrichtung Eingangsdaten des industriellen technischen Prozesses (oftmals als Prozessabbild der Eingänge bezeichnet) entgegen. Die Steuereinrichtung ermittelt sodann unter Verwertung der Eingangsdaten Ausgangsdaten für den industriellen technischen Prozess (oftmals als Prozessabbild der Ausgänge bezeichnet). Soweit erforderlich, werden zur Ermittlung der Ausgangsdaten zusätzlich zu den Eingangsdaten auch interne Daten der Steuereinrichtung wie beispielsweise die Zustände von Merkern und Timern, verwertet Die ermittelten Ausgangsdaten gibt die Steuereinrichtung an den industriellen technischen Prozess aus.

In vielen Fällen sind zusätzlich zu dieser zyklisch ausgeführten Task - im Rahmen der vorliegenden Erfindung als Basistask bezeichnet - weitere Tasks vorhanden. Diese Tasks werden durch das Eintreten eines spezifischen Ereignisses gestartet. Ein Beispiel eines derartigen Ereignisses ist ein Zeitablauf. Ein anderes Beispiel eines derartigen Ereignisses ist ein Auftreten eines Prozessalarms, beispielsweise des Anstiegs einer Temperatur über einen vorgegebenen Grenzwert, oder ein Interrupt. Wenn ein derartiges spezifisches Ereignis - also eine entsprechende Startbedingung für die entsprechende weitere Task - eintritt, wird die zyklische Task unterbrochen und stattdessen die entsprechende weitere Task ausgeführt. Im Rahmen der jeweiligen weiteren Task ermittelt die Steuereinrichtung ebenfalls Ausgangsdaten für den industriellen technischen 1Prozess und gibt sie an den industriellen technischen Prozess aus.

In der Regel weist jede derartige weitere Task - im Rahmen der vorliegenden Erfindung als getriggerte Task bezeichnet - eine jeweilige Priorität auf. Ausgeführt wird stets diejenige getriggerte Task, deren Startbedingung erfüllt ist, die noch nicht vollständig abgearbeitet ist und der die höchste Priorität zugeordnet ist. Ist keine derartige Task vorhanden, wird die Basistask ausgeführt.

Die Basistask beginnt und endet mit einem sogenannten Zykluskontrollpunkt. Der Zykluskontrollpunkt ist jeweils erreicht, wenn ab dem vorhergehenden Zykluskontrollpunkt zum einen die Basistask einmal vollständig ausgeführt wurde und zum anderen keine getriggerten Tasks ausgeführt werden. Die Zeit, die für einen derartigen einzelnen Zyklus der Basistask benötigt wird, ist ein Maß für die Belastung der Steuereinrichtung mit der Ausführung des Steuerprogramms.

Der Zykluskontrollpunkt wird im Stand der Technik auch anderweitig genutzt, beispielsweise dazu, um an dieser Stelle ein Zuschalten von zuvor nachgeladenem Programmcode und/oder ein Entfernen von nicht mehr auszuführendem Programmcode zu bewirken.

Der oben stehend skizzierte Programmablauf kann nicht ohne weiteres in effizienter Weise auf eine Steuereinrichtung übertragen werden, die mehrere Prozessorkerne aufweist, ohne wesentliche Eigenschaften der Programmstruktur wie insbesondere den Zykluskontrollpunkt aufzugeben.

Es ist zwar möglich, eine Steuereinrichtung mit mehreren Prozessorkernen zu verwenden, die Steueraufgabe aber nur auf einem einzelnen Prozessorkern auszuführen. In diesem Fall können auf den anderen Prozessorkernen lediglich andere Aufgaben ausgeführt werden, die nichts mit der Steuerung des industriellen technischen Prozesses als solches zu tun haben. Der eigentliche Vorteil einer Steuereinrichtung mit mehreren Prozessorkernen - nämlich die höhere Leistungsfähigkeit aufgrund der parallelen Nutzung der Prozessorkerne - kann in diesem Fall nicht ausgenutzt werden.

Es ist weiterhin bekannt, eine Steuereinrichtung mit mehreren Prozessorkernen zu verwenden, wobei auf jedem Prozessorkern ein eigenes Steuerprogramm abläuft. Dies ist jedoch nur dann praktikabel, wenn die Steuerprogramme unabhängig voneinander ausgeführt werden können. Es gäbe dann auch mehrere Zykluskontrollpunkte und mehrere Zykluszeiten, die aber nichts mehr über die Auslastung des Systems als Ganzes aussagen würden.

Die Aufgabe der vorliegenden Erfindung besteht darin, Möglichkeiten zu schaffen, mittels derer auf einfache und praktikable Weise eine Verteilung der Tasks der Steueraufgabe auf mehrere Prozessorkerne möglich ist, ohne die Nachteile des Standes der Technik in Kauf nehmen zu müssen. Insbesondere sollen die heutigen Konzepte, die mit der Zykluszeit und den Zykluskontrollpunkten arbeiten, erhalten bleiben.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 7.

Erfindungsgemäß wird ein Steuerverfahren der eingangs genannten Art dadurch ausgestaltet,
- dass die Tasks auf mehrere Prozessorkerne der Steuereinrichtung verteilt werden,
- dass die Prozessorkerne ab dem Starten eines Zyklus der Basistask, sofern sie für die Ausführung einer getriggerten Task freigeschaltet sind, jeweils prüfen, ob mindestens eine von ihnen ausführbare getriggerte Task zur Ausführung freigegeben ist,
- dass die Prozessorkerne, sofern dies der Fall ist, eine von ihnen ausführbare getriggerte Tasks ausführen und anderenfalls den jeweiligen Zyklus der Basistask oder keine Task ausführen und
- dass der die Basistask ausführende Prozessorkern die Ausführung der Basistask mit dem Abschluss des jeweiligen Zyklus der Basistask unterbricht, bis alle anderen Prozessorkerne keine getriggerte Task mehr ausführen, und erst dann die Ausführung des nächsten Zyklus der Basistask startet.

Aufgrund der Verteilung der Tasks auf mehrere Prozessorkerne erfolgt - wie zu erwarten - eine beschleunigte Ausführung der Steueraufgabe. Aufgrund der Prüfung auf die Notwendigkeit, eine höherpriore Task (im Ergebnis also eine getriggerte Task) auszuführen, und gegebenenfalls auch das Ausführen dieses Task bleibt gewährleistet, dass die entsprechende Task auch ausgeführt wird. Die Basistask wird hierbei, soweit erforderlich, unterbrochen. Dadurch, dass die Prozessorkerne, wenn keine getriggerte Task auszuführen ist, jedoch entweder den entsprechenden Zyklus der Basistask oder keine Task ausführen, ist eine erste Voraussetzung dafür, dass der Zykluskontrollpunkt und die damit verbundenen Möglichkeiten erhalten bleiben, erfüllt. Die zweite Voraussetzung für das Erhalten des Zykluskontrollpunkts ist dadurch erfüllt, dass der die Basistask ausführende Prozessorkern die Ausführung der Basistask mit dem Abschluss des jeweiligen Zyklus der Basistask unterbricht, bis alle anderen Prozessorkerne keine getriggerte Task mehr ausführen. Dieser Prozessorkern startet also die Ausführung des nächsten Zyklus der Basistask nicht sofort nach dem Abschluss des jeweiligen Zyklus der Basistask, sondern erwartet erst den Zustand ab, dass alle auszuführenden getriggerten Tasks zuvor beendet werden.

Sofern die Prozessorkerne keine Task ausführen, können die Prozessorkerne beispielsweise eine sogenannten Leerlauftask ausführen, d.h. eine Task, die ohne Auswirkungen auf den industriellen technischen Prozess ist und lediglich signalisiert, dass der jeweilige Prozessorkern derzeit zur Übernahme anderer Tätigkeiten bereit ist.

Es ist möglich, dass die Tasks dem jeweiligen Prozessorkern statisch zugeordnet sind. Diese Vorgehensweise ist besonders einfach zu realisieren. Alternativ ist es möglich, dass die Tasks dem jeweiligen Prozessorkern dynamisch zugeordnet werden. Diese Vorgehensweise führt zu einer besonders effizienten Ausnutzung der Rechenleistung der Prozessorkerne der Steuereinrichtung. Es ist auch eine gewisse Mischform möglich, dass beispielsweise die Basistask einem der Prozessorkerne statisch zugeordnet ist, die getriggerten Tasks den Prozessorkernen jedoch dynamisch zugeordnet werden.

Es ist möglich, dass die Prozessorkerne für die Ausführung einer getriggerten Task permanent freigeschaltet sind. In diesem Fall muss - selbstverständlich - auch nicht geprüft werden, ob eine derartige Freischaltung gegeben ist. Diese Vorgehensweise ist einfach zu realisieren, kann aber dazu führen, dass die Zykluszeit - also der zeitliche Abstand zwischen aufeinanderfolgenden Zykluskontrollpunkten groß wird.

Alternativ ist es möglich, dass der den jeweiligen Zyklus der Basistask ausführende Prozessorkern mit dem Abschluss des jeweiligen Zyklus der Basistask die Prozessorkerne - also sowohl sich selbst als auch die anderen Prozessorkerne - für die Ausführung der getriggerten Tasks sperrt. Das Sperren bewirkt in diesem Fall jedoch keine sofortige, vollständige Sperre. Vielmehr wird erreicht, dass die anderen Prozessorkerne bereits in Ausführung befindliche getriggerte Tasks weiter ausführen und abschließen können. Sie können aber keine neue getriggerte Tasks mehr starten, deren Startbedingung erst nach der Sperre eintritt. Mit dem Starten des jeweils nachfolgenden Zyklus der Basistask gibt der entsprechende Prozessorkern aber die Prozessorkerne - also sowohl sich selbst als auch die anderen Prozessorkerne - wieder für die Ausführung der getriggerten Tasks frei.

Durch diese Vorgehensweise kann eine kürzere Zykluszeit erreicht werden. Es muss aber im Einzelfall in Kauf genommen werden, dass Tasks höherer Priorität geringfügig verzögert werden.

Die jeweilige Startbedingung für die getriggerten Tasks kann insbesondere ein Zeitablauf oder ein zeitunabhängiges Ereignis des industriellen technischen Prozesses sein.

Vorzugsweise prüft mindestens einer der Prozessorkerne zwischen dem Abschluss eines jeweiligen Zyklus der Basistask und dem Starten des jeweils nachfolgenden Zyklus der Basistask, ob ein Wechsel von getriggerten Tasks erfolgen soll. Bejahendenfalls führt der entsprechende Prozessorkern den Wechsel durch. Verneinendenfalls führt der entsprechende Prozessorkern keinen Wechsel durch. Durch diese Vorgehensweise kann weiterhin das Nachladen von neuen getriggerten Tasks erfolgen.

Vorzugsweise speichern die Prozessorkerne zumindest diejenigen Daten der Tasks, welche sie im Rahmen der Ausführung der jeweiligen Task selbst ermitteln und an den industriellen technischen Prozess ausgeben, unabhängig von den Daten der anderen Tasks. Dadurch können die Tasks unabhängig voneinander ausgeführt werden.

Wenn die Prozessorkerne ab dem Starten eines Zyklus der Basistask eine getriggerte Task ausführen, führen die Prozessorkerne in aller Regel, sofern mehrere von ihnen ausführbare getriggerte Tasks zur Ausführung freigegeben sind, die von ihnen ausführbare getriggerte Task mit der höchsten Priorität aus.

Die Aufgabe wird weiterhin durch ein Steuerprogramm mit den Merkmalen des Anspruchs 9 gelöst. Erfindungsgemäß wird ein Steuerprogramm für eine mehrere Prozessorkerne aufweisende Steuereinrichtung für einen industriellen technischen Prozess geschaffen, wobei das Steuerprogramm Maschinencode umfasst, der von den Prozessorkernen der Steuereinrichtung abarbeitbar ist, wobei die Abarbeitung des Maschinencodes durch die Prozessorkerne der Steuereinrichtung bewirkt, dass die Prozessorkerne gemeinsam ein erfindungsgemäßes Steuerverfahren ausführen.

Die Aufgabe wird weiterhin durch eine Steuereinrichtung mit den Merkmalen des Anspruchs 10 gelöst. Erfindungsgemäß weist die Steuereinrichtung mehrere Prozessorkerne auf und ist die Steuereinrichtung mit einem erfindungsgemäßen Steuerprogramm programmiert, so dass die Prozessorkerne der Steuereinrichtung im Betrieb der Steuereinrichtung gemeinsam ein erfindungsgemäßes Steuerverfahren ausführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine industrielle technische Anlage und eine Steuereinrichtung,
- FIG 2: eine Zuordnung von Tasks zu Prozessorkernen,
- FIG 3: eine alternative Zuordnung von Tasks zu Prozessorkernen,
- FIG 4 und 5: Ablaufdiagramme,
- FIG 6 und 7: Zeitdiagramme,
- FIG 8 bis 10: weitere Ablaufdiagramme,
- FIG 11 und 12: weitere Zeitdiagramme,
- FIG 13: ein weiteres Ablaufdiagramm und
- FIG 14: ein Blockschaltbild der Steuereinrichtung von FIG 1.

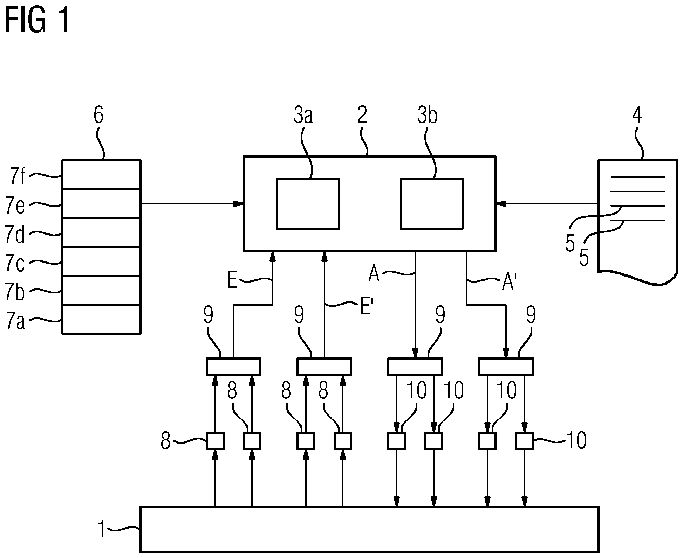

Gemäß FIG 1 wird ein industrieller technischer Prozess 1 von einer Steuereinrichtung 2 gesteuert. Der industrielle technische Prozess 1 kann beliebiger Natur sein. Beispielsweise kann es sich um eine Chemieanlage, eine Abfülleinrichtung, ein Postverteilzentrum oder um eine andere industrielle technische Anlage handeln. Die Steuereinrichtung 2 ist in der Regel als speicherprogrammierbare Steuerung (SPS, englisch PLC = programmable logic controller) ausgebildet. Sie kann aber auch andersartig ausgebildet sein.

Die Steuereinrichtung 2 weist mehrere Prozessorkerne 3 auf. Die Prozessorkerne 3 sind - zumindest in der Regel - gleichartig. Dargestellt ist in FIG 1 eine Ausgestaltung der Steuereinrichtung mit der minimalen Anzahl an Prozessorkernen 3, nämlich zwei Prozessorkernen 3. Mit dieser Ausgestaltung wird die vorliegende Erfindung nachstehend erläutert. Eine Erweiterung der vorliegenden Erfindung auf eine Steuereinrichtung 2 mit mehr als zwei Prozessorkernen 3 ist jedoch ohne weiteres möglich. Nachfolgend werden die beiden Prozessorkerne 3 als erster Prozessorkern 3a und zweiter Prozessorkern 3b bezeichnet. Diese Bezeichnung dient jedoch lediglich der sprachlichen Unterscheidung der Prozessorkerne 3a, 3b voneinander.

Die Steuereinrichtung 2 ist mit einem Steuerprogramm 4 programmiert. Das Steuerprogramm 4 umfasst Maschinencode 5, der von den Prozessorkernen 3 und damit von der Steuereinrichtung 2 als Ganzes abarbeitbar ist. Sofern nachfolgend davon die Rede ist, dass bestimmte Maßnahmen von einem der Prozessorkerne 3 ergriffen werden, impliziert dies somit zwangsweise auch, dass die jeweilige Maßnahme von der Steuereinrichtung 2 als Ganzes ergriffen wird. Insbesondere bewirkt die Abarbeitung des Maschinencodes 5 durch die Prozessorkerne 3, dass die Prozessorkerne 3 gemeinsam ein Steuerverfahren ausführen, das nachstehend näher erläutert wird.

Die Steuereinrichtung 2 soll den industriellen technischen Prozess 1 gemäß einer Steueraufgabe 6 steuern und kontrollieren. Die Steueraufgabe 6 ist der Steuereinrichtung 2 in der Regel in Form eines Nutzprogramms vorgegeben. Die Steueraufgabe 6 bzw. das Nutzprogramm werden von der Steuereinrichtung 2 und deren Prozessorkernen 3 unter Kontrolle durch das Steuerprogramm 4 ausgeführt.

Die Steueraufgabe 6 weist gemäß FIG 1 mehrere Tasks 7 auf, denen jeweils eine Priorität zugeordnet ist. Die Tasks 7 sind in FIG 1 mit einem kleinen Buchstaben a bis f ergänzt, um sie bei Bedarf voneinander unterscheiden zu können. Auch nachfolgend wird bei Bedarf zwischen den verschiedenen Tasks 7a bis 7f unterschieden. Die in FIG 1 dargestellte Anzahl von sechs Tasks 7 ist jedoch nur rein beispielhaft. Es könnten auch mehr oder weniger als sechs Tasks 7 vorhanden sein.

Die Prioritäten sind jeweils nur einmal vergeben, so dass sich durch die Prioritäten eine eindeutige Reihenfolge der Tasks 7 ergibt. Nachfolgend wird ohne Beschränkung der Allgemeinheit angenommen, dass der Task 7a die niedrigste Priorität aufweist, der Task 7b die nächsthöhere Priorität usw. bis zum Task 7f, der die höchste Priorität aufweist.

Die Tasks 7 werden auf die Prozessorkerne 3 der Steuereinrichtung 2 verteilt. Jede der Tasks 7 wird also von einem der Prozessorkerne 3 ausgeführt.

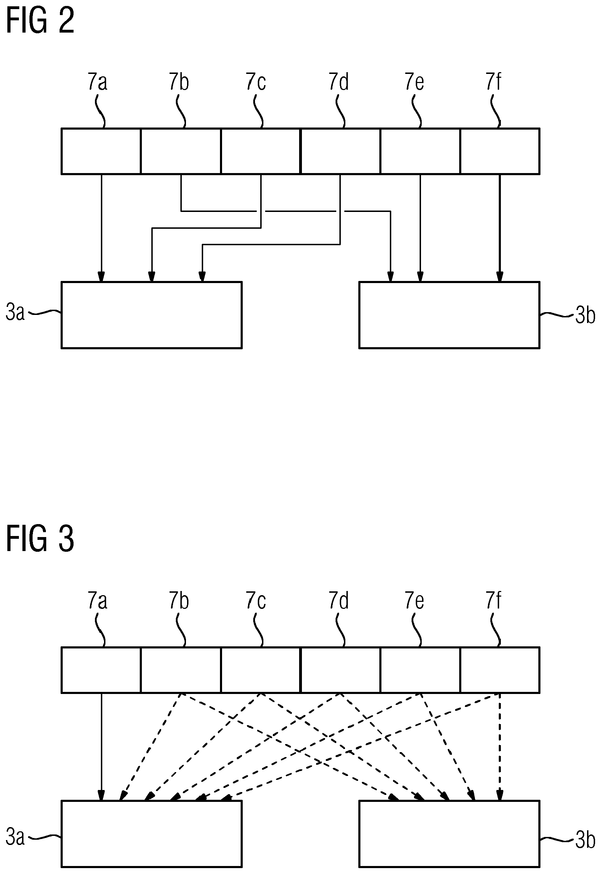

Es ist möglich, dass die Tasks 7a bis 7f entsprechend der Darstellung in FIG 2 dem jeweiligen Prozessorkern 3a, 3b statisch zugeordnet sind. Die statische Zuordnung ist in FIG 2 durch durchgezogene Pfeile angedeutet. Alternativ ist es möglich, dass die Tasks 7a bis 7f entsprechend der Darstellung in FIG 3 dem jeweiligen Prozessorkern 3a, 3b dynamisch zugeordnet werden. Die dynamische Zuordnung ist in FIG 3 durch gestrichelte Pfeile angedeutet. Eine Ausnahme kann jedoch auch in diesem Fall für den Task 7a mit der niedrigsten Priorität gelten. Diese Task 7a - nachfolgend als Basistask bezeichnet - kann oftmals einem der Prozessorkerne 3a, 3b statisch zugeordnet sein, obwohl bezüglich der anderen Tasks 7b bis 7f eine dynamische Zuordnung erfolgt. Nachfolgend wird angenommen, dass zumindest die Basistask 7a dem ersten Prozessorkern 3a statisch zugeordnet ist.

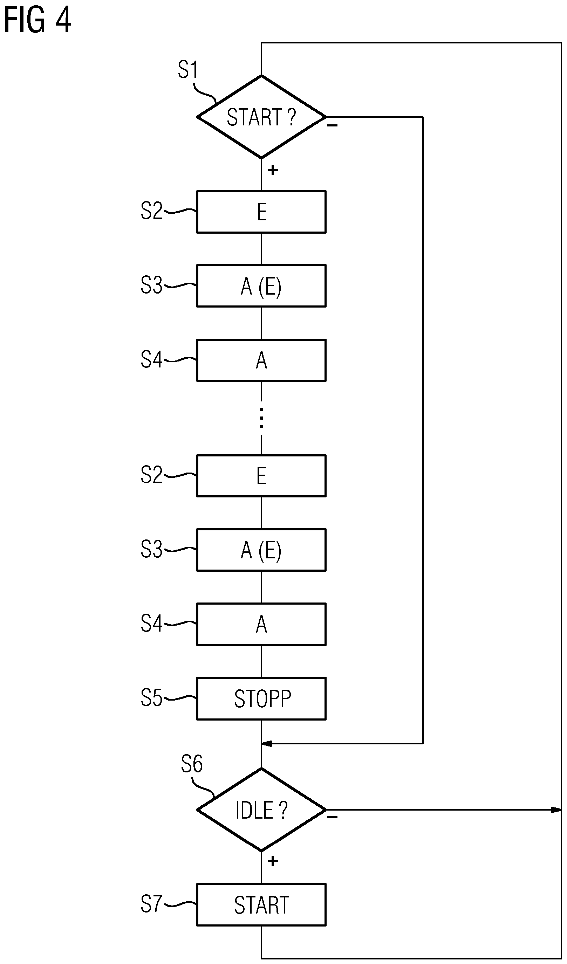

Die Basistask 7a ist prinzipiell jederzeit ausführbar und wird entsprechend der Darstellung in FIG 4 zyklisch ausgeführt. Vor der Ausführung jeweils eines Zyklus der Basistask 7a prüft der erste Prozessorkern lediglich in einem Schritt S1, ob der jeweilige Zyklus der Basistask 7a zur Ausführung freigegeben ist. Wenn dies der Fall ist, nimmt der erste Prozessorkern 3a im Rahmen eines jeweiligen Zyklus der Basistask 7a in einem Schritt S2 Basis-Eingangsdaten E des industriellen technischen Prozesses 1 entgegen. Insbesondere können die Basis-Eingangsdaten E dem ersten Prozessorkern 3a über Sensoreinrichtungen 8 und Peripherieeinheiten 9 zugeführt werden. In einem Schritt S3 ermittelt der erste Prozessorkern 3a Basis-Ausgangsdaten A. Der erste Prozessorkern 3a verwertet im Rahmen der Ermittlung der Basis-Ausgangsdaten A die Basis-Eingangsdaten E. In einem Schritt S4 gibt der erste Prozessorkern 3a die ermittelten Basis-Ausgangsdaten A an den industriellen technischen Prozess 1 aus. Das Ausgeben kann über dieselben oder über andere Peripherieeinheiten 9 und Aktoreinrichtungen 10 erfolgen.

Es ist möglich, dass hiermit der jeweilige Zyklus der Basistask 7a bereits abgeschlossen ist. In anderen Fällen kann die entsprechende Vorgehensweise, also die Abfolge der Schritte S2 bis S4, gegebenenfalls mehrfach wiederholt werden. In diesem Fall können, sofern erforderlich, bei den einzelnen Wiederholungen voneinander verschiedene Basis-Eingangsdaten E entgegengenommen werden und voneinander verschiedene Basis-Ausgangsdaten A ermittelt und an den industriellen technischen Prozess 1 ausgegeben werden.

Nach der (gegebenenfalls wiederholten) Ausführung der Schritte S2 bis S4 setzt der erste Prozessorkern 3a in einem Schritt S5 die Ausführung der Basistask 7a auf STOPP. Sodann führt der erste Prozessorkern 3a in einem Schritt S6 eine Prüfung aus. Solange die im Schritt S5 ausgeführte Prüfung negativ ausfällt, geht der erste Prozessorkern 3a zum Schritt S1 zurück. Wenn die im Schritt S6 ausgeführte Prüfung positiv ausfällt, setzt der erste Prozessorkern 3a in einem Schritt S7 die Ausführung der Basistask 7a auf START und geht sodann zum Schritt S1 über. Die Schritte S1 und S5 bis S7 bewirken somit im Ergebnis, dass der erste Prozessorkern 3a die Ausführung der Basistask 7a mit dem Abschluss des jeweiligen Zyklus der Basistask 7a unterbricht, bis die Prüfung des Schrittes S6 positiv ausfällt. Erst dann wird der nächste Zyklus der Basistask 7a gestartet. Die Prüfung des Schrittes S6 wird später näher erläutert werden.

Die anderen Tasks 7b bis 7f sind getriggerte Tasks. Die getriggerten Tasks 7b bis 7f werden aufgrund des Eintretens einer jeweiligen Startbedingung jeweils zur einmaligen Ausführung freigegeben und danach jeweils einmal ausgeführt. Eine erneute Ausführung erfolgt erst wieder, wenn die jeweilige Startbedingung erneut eintritt.

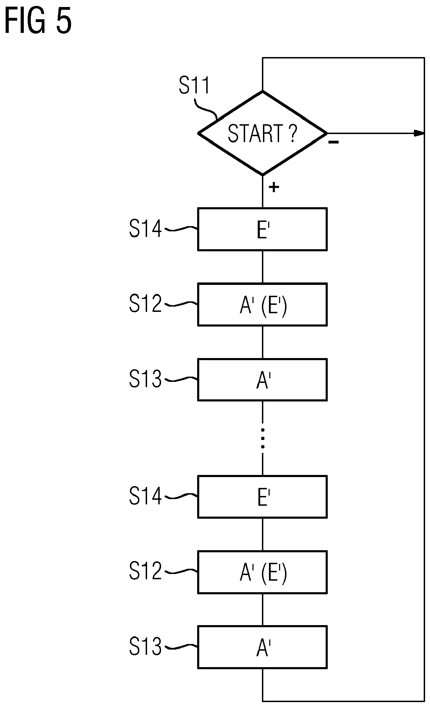

Diese Vorgehensweise wird nachstehend in Verbindung mit FIG 5 für die getriggerte Task 7b näher erläutert. Hierbei wird angenommen, dass die getriggerte Task 7b von dem zweiten Prozessorkern 3b ausgeführt wird. Die entsprechende Vorgehensweise wäre jedoch ebenso auch gültig, wenn sie von dem ersten Prozessorkern 3a ausgeführt würde. Weiterhin ist die Vorgehensweise in analoger Weise auch für die anderen getriggerten Tasks 7c bis 7f gültig.

Gemäß FIG 5 prüft der zweite Prozessorkern 3b in einem Schritt S11, ob die Startbedingung für die getriggerte Task 7b eingetreten ist. Die Startbedingung kann beispielsweise ein Zeitablauf (Beispiel: Ausführung alle 10 Sekunden) oder ein zeitunabhängiges Ereignis des industriellen technischen Prozesses 1 (Beispiel: Erkennen einer kritischen Temperatur) sein.

Solange dies nicht der Fall ist, geht der zweite Prozessorkern 3b wieder zum Schritt S11 zurück. Wenn die Startbedingung hingegen eingetreten ist, geht der zweite Prozessorkern 3b zu einem Schritt S12 über. Im Schritt S12 ermittelt der zweite Prozessorkern 3b Zusatz-Ausgangsdaten A' für den industriellen technischen Prozess 1. Die ermittelten Zusatz-Ausgangsdaten A' gibt der zweite Prozessorkern 3b in einem Schritt S13 an den industriellen technischen Prozess 1 aus. Es ist möglich, dass der zweite Prozessorkern 3b die Zusatz-Ausgangsdaten A' unabhängig von Zusatz-Eingangsdaten E' des industriellen technischen Prozesses 1 ermittelt. Alternativ ist entsprechend der Darstellung in FIG 5 eine derartige Abhängigkeit möglich. Im letztgenannten Fall ist dem Schritt S12 ein Schritt S14 vorgeordnet, in dem der zweite Prozessorkern 3b die Zusatz-Eingangsdaten E' entgegennimmt.

Analog zur Vorgehensweise im Rahmen der Basistask 7a ist es möglich, dass hiermit die getriggerte Task 7b bereits abgeschlossen ist. In anderen Fällen kann die entsprechende Vorgehensweise, also die Abfolge der Schritte S12 und S13 (gegebenenfalls einschließlich des Schrittes S14), wiederholt ausgeführt werden. In diesem Fall können, soweit erforderlich, bei den einzelnen Wiederholungen voneinander verschiedene Zusatz-Ausgangsdaten A' ermittelt und an den industriellen technischen Prozess 1 ausgegeben werden und gegebenenfalls auch voneinander verschiedene Zusatz-Eingangsdaten E' entgegengenommen werden.

Die Prüfung des Schrittes S11 ist keine Prüfung eines Zustands, sondern eine Prüfung eines Übergangs. Der JA-Zweig des Schrittes S11 wird also nur dann beschritten, wenn die Startbedingung neu eintritt. Die nachfolgenden Schritte S12 bis S14 werden danach nur einmal ausgeführt. Danach wird ein erneutes Eintreten der Startbedingung abgewartet.

Die Tasks 7a bis 7e (also alle Tasks 7a bis 7f mit Ausnahme der getriggerten Task 7f mit der höchsten Priorität) können durch andere Tasks 7 mit höherer Priorität unterbrochen werden. Sofern eine derartige Unterbrechung der Basistask 7a bzw. einer der getriggerten Tasks 7b bis 7e erfolgt, wird die jeweilige Task 7a bis 7e nach der Unterbrechung an der Stelle fortgesetzt, an welcher sie unterbrochen wurde. Die entsprechende Vorgehensweise ist Fachleuten allgemein bekannt.

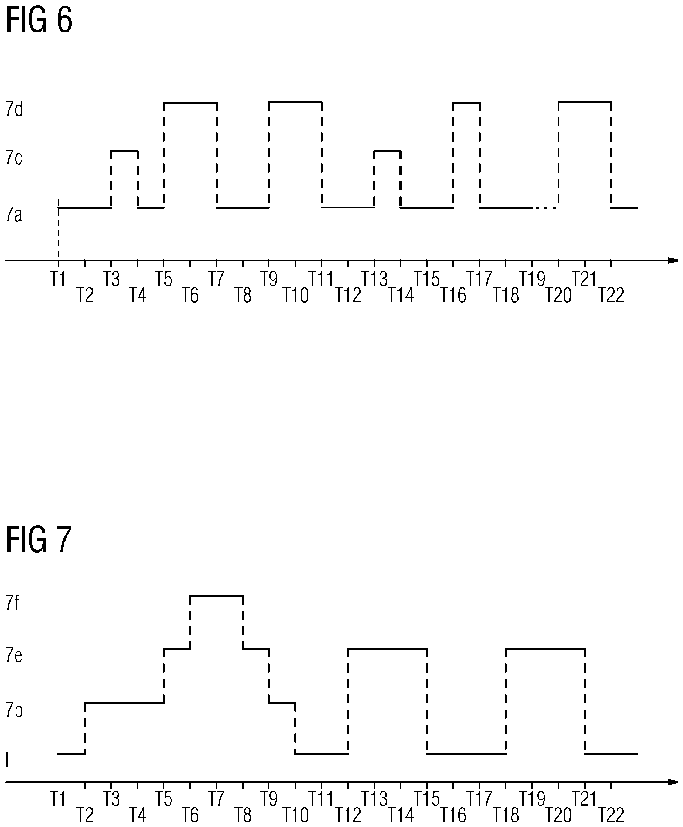

Nachstehend wird in Verbindung mit den FIG 6 und 7 das Zusammenwirken der verschiedenen Tasks 7 erläutert. FIG 6 zeigt hierbei die Vorgehensweise für den ersten Prozessorkern 3a, FIG 7 für den zweiten Prozessorkern 3b. In Verbindung mit den FIG 6 und 7 erwähnte Zeitpunkte T1 bis T22 folgen zeitlich aufeinander. Der Zeitpunkt T1 liegt also vor dem Zeitpunkt T2, dieser wiederum vor dem Zeitpunkt T3 usw. Entgegen der Darstellung in den Buchstaben FIG 6 und 7, in denen die Zeitpunkte T1 bis T22 äquidistant angeordnet sind, können die zeitlichen Abstände der Zeitpunkte T1 bis T22 jedoch variieren.

Zum Zeitpunkt T1 startet der erste Prozessorkern 3a die Ausführung eines Zyklus der Basistask 7a. Der zweite Prozessorkern 3b führt zu diesem Zeitpunkt keine Task 7 aus. Er führt vielmehr eine Leerlauftask I (I = idle = Leerlauf) aus. Die Leerlauftask I hat keine Wechselwirkung mit dem industriellen technischen Prozess 1. Der Zeitpunkt T1 entspricht einem Zykluskontrollpunkt.

Zum Zeitpunkt T2 ist die Startbedingung für die getriggerten Task 7b erfüllt. Der zweite Prozessorkern 3b unterbricht daher die Ausführung der Leerlauftask I und beginnt mit der Ausführung der getriggerten Task 7b. Der erste Prozessorkern 3a führt weiterhin die Basistask 7a aus.

Zum Zeitpunkt T3 ist die Startbedingung für die getriggerte Task 7c erfüllt. Der erste Prozessorkern 3a unterbricht daher die Ausführung der Basistask 7a und beginnt mit der Ausführung der getriggerten Task 7c. Der zweite Prozessorkern 3b setzt die Ausführung der getriggerten Task 7b fort.

Zum Zeitpunkt T4 ist die Ausführung der getriggerten Task 7c beendet. Der erste Prozessorkern 3a nimmt daher die Ausführung der Basistask 7a wieder auf. Der zweite Prozessorkern 3b führt weiterhin die getriggerte Task 7b aus.

Zum Zeitpunkt T5 sind - zufälligerweise gleichzeitig - die Startbedingungen für die getriggerten Tasks 7d und 7e erfüllt. Der erste Prozessorkern 3a unterbricht daher die Ausführung der Basistask 7a und beginnt mit der Ausführung der getriggerten Task 7d. Der zweite Prozessorkern 3a unterbricht die Ausführung der getriggerten Task 7b und beginnt mit der Ausführung der getriggerten Task 7e.

Zum Zeitpunkt T6 ist die Startbedingung für die getriggerte Task 7f erfüllt. Der zweite Prozessorkern 3b unterbricht daher die Ausführung der getriggerten Task 7e und beginnt mit der Ausführung der getriggerten Task 7f. Der erste Prozessorkern 3a setzt die Ausführung der getriggerten Task 7d fort.

Zum Zeitpunkt T7 ist die Ausführung der getriggerten Task 7d beendet. Der erste Prozessorkern 3a nimmt daher die Ausführung der Basistask 7a wieder auf. Der zweite Prozessorkern 3b führt weiterhin die getriggerte Task 7f aus.

Zum Zeitpunkt T8 ist die Ausführung der getriggerten Task 7f beendet. Der zweite Prozessorkern 3b nimmt daher die Ausführung der getriggerten Task 7e wieder auf. Der erste Prozessorkern 3a führt weiterhin die Basistask 7a aus.

Zum Zeitpunkt T9 ist die Ausführung der getriggerten Task 7e beendet. Der zweite Prozessorkern 3b nimmt daher die Ausführung der getriggerten Task 7b wieder auf. Zufälligerweise gleichzeitig ist die Startbedingung für die getriggerte Task 7d erfüllt. Der erste Prozessorkern 3a unterbricht daher die Ausführung der Basistask 7a und beginnt mit der Ausführung der getriggerten Task 7d.

Zum Zeitpunkt T10 ist die Ausführung der getriggerten Task 7b beendet. Der zweite Prozessorkern 3b nimmt daher die Ausführung des Leerlaufprozesses I wieder auf. Der erste Prozessorkern 3a setzt die Ausführung der getriggerten Task 7d fort.

Zum Zeitpunkt T11 ist die Ausführung der getriggerten Task 7d beendet. Der erste Prozessorkern 3a nimmt daher die Ausführung der Basistask 7a wieder auf. Der zweite Prozessorkern 3b setzt die Ausführung der Leerlauftask I fort.

Zum Zeitpunkt T12 ist die Startbedingung für die getriggerte Task 7e erfüllt. Der zweite Prozessorkern 3b unterbricht daher die Ausführung der Leerlauftask I und beginnt mit der Ausführung der getriggerten Task 7e. Der erste Prozessorkern 3a führt weiterhin die Basistask 7a aus.

Zum Zeitpunkt T13 ist die Startbedingung für die getriggerte Task 7c erfüllt. Der erste Prozessorkern 3a unterbricht daher die Ausführung der Basistask 7a und beginnt mit der Ausführung der getriggerten Task 7c. Der zweite Prozessorkern 3b setzt die Ausführung der getriggerten Task 7e fort.

Zum Zeitpunkt T14 ist die Ausführung der getriggerten Task 7c beendet. Der erste Prozessorkern 3a nimmt daher die Ausführung der Basistask 7a wieder auf. Der zweite Prozessorkern 3b führt weiterhin die getriggerte Task 7e aus.

Zum Zeitpunkt T15 ist die Ausführung der getriggerten Task 7e beendet. Der zweite Prozessorkern 3b nimmt daher die Ausführung der Leerlauftask I wieder auf. Der erste Prozessorkern 3a setzt die Ausführung der Basistask 7a fort.

Zum Zeitpunkt T16 ist die Startbedingung für die getriggerte Task 7d erfüllt. Der erste Prozessorkern 3a unterbricht daher die Ausführung der Basistask 7a und beginnt mit der Ausführung der getriggerten Task 7d. Der zweite Prozessorkern 3b setzt die Ausführung der Leerlauftask I fort.

Zum Zeitpunkt T17 ist die Ausführung der getriggerten Task 7d beendet. Der erste Prozessorkern 3a nimmt daher die Ausführung der Basistask 7a wieder auf. Der zweite Prozessorkern 3b setzt die Ausführung der Leerlauftask I fort.

Zum Zeitpunkt T18 ist die Startbedingung für die getriggerte Task 7e erfüllt. Der zweite Prozessorkern 3b unterbricht daher die Ausführung der Leerlauftask I und beginnt mit der Ausführung der getriggerten Task 7e. Der erste Prozessorkern 3a führt weiterhin die Basistask 7a aus.

Zum Zeitpunkt T19 ist die Ausführung des jeweiligen Zyklus der Basistask 7a beendet. Ab diesem Zeitpunkt prüft der erste Prozessorkern 3a fortlaufend, ob der zweite Prozessorkern 3b sich in der Leerlauftask I befindet. Diese Prüfung entspricht dem Schritt S6 von FIG 4.

Im vorliegenden Fall führt zum Zeitpunkt T19 der zweite Prozessorkern 3b die getriggerte Task 7e aus. Der erste Prozessorkern 3a unterbricht daher die Ausführung der Basistask 7a und wartet die Beendigung der getriggerten Task 7e ab.

Gemäß FIG 6 tritt jedoch bereits vor der Beendigung der getriggerten Task 7e zum Zeitpunkt T20 die Startbedingung für die getriggerte Task 7d ein. Der erste Prozessorkern 3a beginnt daher mit der Ausführung der getriggerten Task 7d, und zwar noch bevor die Ausführung der getriggerten Task 7e durch den zweiten Prozessorkern 3b beendet ist.

Zum Zeitpunkt T21 ist die Ausführung der getriggerten Task 7e beendet. Der zweite Prozessorkern 3b nimmt daher die Ausführung der Leerlauftask I wieder auf. Der erste Prozessorkern 3a führt noch die getriggerte Task 7d aus.

Zum Zeitpunkt T22 ist die Ausführung der getriggerten Task 7d beendet. Der erste Prozessorkern 3a nimmt daher die fortlaufende Prüfung, ob der zweite Prozessorkern 3b die Leerlauftask I ausführt, wieder auf.

Zum Zeitpunkt T22 führt der zweite Prozessorkern 3b die Leerlauftask I aus. Dieser Umstand - also dass sowohl der zweite Prozessorkern 3b die Leerlauftask I ausführt als auch der erste Prozessorkern 3a den Zyklus der Basistask 7a beendet hat - führt dazu, dass der erste Prozessorkern 3a die Ausführung des nächsten Zyklus der Basistask 7a startet. Der Zeitpunkt T22 entspricht somit ebenfalls einem Zykluskontrollpunkt. Der zeitliche Abstand der Zeitpunkte T1 und T22 entspricht einer Zykluszeit. Die Zykluszeit kann weitergehend ausgewertet werden. Aufgrund der Auswertungen kann insbesondere eine Optimierung des Betriebs der Steuereinrichtung 2 erfolgen.

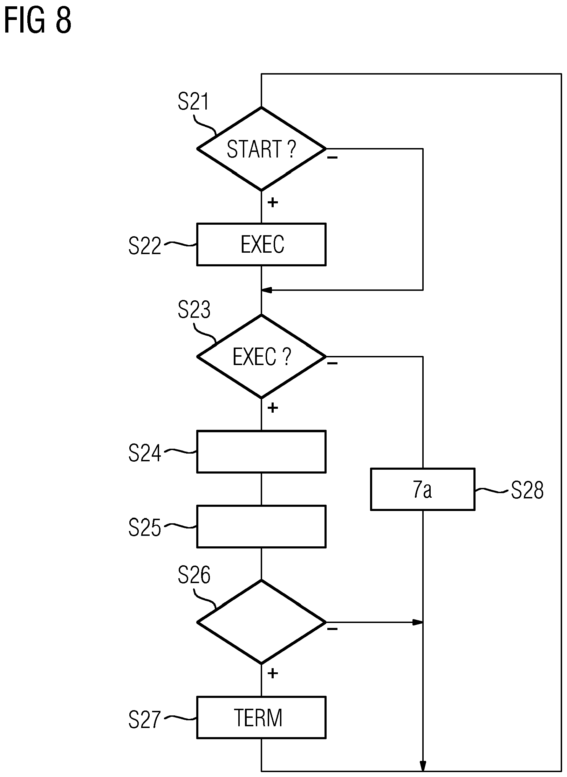

Die von den Prozessorkernen 3a, 3b realisierte Abarbeitung der Tasks 7 wird nachfolgend in Verbindung mit FIG 8 anhand der Vorgehensweise für den Prozessorkern 3a schematisch nochmals erläutert.

Gemäß FIG 8 prüft der erste Prozessorkern 3a ab dem Starten eines Zyklus der Basistask 7a in einem Schritt S21, ob die Startbedingung einer getriggerten Task 7b bis 7f neu eingetreten ist. Der Schritt S21 entspricht der Prüfung auf die Startbedingung des Schrittes S11 von FIG 5. Wenn eine Startbedingung eingetreten ist, setzt der erste Prozessorkern 3a in einem Schritt S22 einen Sollausführungszustand dieser getriggerten Task 7b bis 7f auf EXEC (für execute = ausführen). Dieser Sollausführungszustand wird für diese getriggerten Task 7b bis 7f beibehalten, bis die entsprechende getriggerte Task 7b bis 7f vollständig abgearbeitet ist.

In einem Schritt S23 prüft der erste Prozessorkern 3a, ob der Sollausführungszustand mindestens einer von ihm ausführbaren getriggerten Task 7b bis 7f auf EXEC gesetzt ist, die entsprechende getriggerte Task 7b bis 7f also zur Ausführung freigegeben ist.

Wenn dies der Fall ist, existiert mindestens eine getriggerte Task 7b bis 7f, die zunächst von dem ersten Prozessorkern 3a prinzipiell ausführbar ist, deren Startbedingung weiterhin erfüllt ist und die schließlich noch nicht vollständig ausgeführt ist. In diesem Fall selektiert der Prozessorkern 3a in einem Schritt S24 die von ihm ausführbare getriggerte Task 7b bis 7f mit der höchsten Priorität. Diese getriggerte Task 7b bis 7f führt der Prozessorkern 3a in einem Schritt S25 aus. Der Schritt S25 korrespondiert mit den Schritten S12 und S13 (und gegebenenfalls auch dem Schritt S14) von FIG 5.

In einem Schritt S26 prüft der Prozessorkern 3a, ob die von ihm im Schritt S25 ausgeführte getriggerte Task 7b bis 7f beendet ist. Wenn dies nicht der Fall ist, geht der erste Prozessorkern 3a zum Schritt S21 zurück. Anderenfalls setzt der erste Prozessorkern 3a in einem Schritt S27 den Sollausführungszustand der im Schritt S25 ausgeführten getriggerten Task 7b bis 7f auf TERM (für terminated = beendet) und geht erst danach zum Schritt S21 zurück. Durch den Schritt S27 wird erreicht, dass die nunmehr beendete getriggerte Task 7b bis 7f bei der nachfolgenden Ausführung des Schrittes S23 nur dann berücksichtigt wird, wenn die Startbedingung dieser getriggerten Task 7b bis 7f erneut eingetreten ist Wenn der erste Prozessorkern 3a im Schritt S23 festgestellt hat, dass keine von ihm ausführbare getriggerte Task 7b bis 7f zur Ausführung freigegeben ist, geht der erste Prozessorkern 3a zu einem Schritt S28 über. Im Schritt S28 führt der erste Prozessorkern 3a den jeweiligen Zyklus der Basistask 7a aus. Der Schritt S28 umfasst auch die Prüfungen der Schritte S1 und S6 von FIG 4. Die Vorgehensweise von FIG 4 muss lediglich dahingehend modifiziert werden, dass im NEIN-Zweig des Schrittes und vom Schritt S7 aus nicht zum Schritt S1 von FIG 4 zurückgegangen wird, sondern zum Schritt S21 von FIG 8.

Die Vorgehensweise für den zweiten Prozessorkern 3b ist völlig analog. Ein Unterschied besteht lediglich in der Ausgestaltung des Schrittes S28. Im Gegensatz zu dem ersten Prozessorkern 3a, der im Schritt S28 den jeweiligen Zyklus der Basistask 7a ausführt, führt der zweite Prozessorkern 3b im Schritt S28 die Leerlauftask I aus.

Wie bereits erwähnt, besteht die Prüfung des Schrittes S6 (siehe FIG 4) darin, zu überprüfen, ob der zweite Prozessorkern 3b keine getriggerte Task 7b bis 7f ausführt bzw. die Leerlauftask I ausführt. Die Vorgehensweise von FIG 8 führt somit dazu, dass der erste Prozessorkern 3a nach der vollständigen Abarbeitung des jeweiligen Zyklus der Basistask 7a - diese gegebenenfalls durch getriggerte Tasks 7b bis 7f unterbrochen - abwartet, bis weder er selbst noch der zweite Prozessorkern 3b eine getriggerte Task 7b bis 7f ausführt. Dann und erst dann startet der erste Prozessorkern 3a die Ausführung des nächsten Zyklus der Basistask 7a.

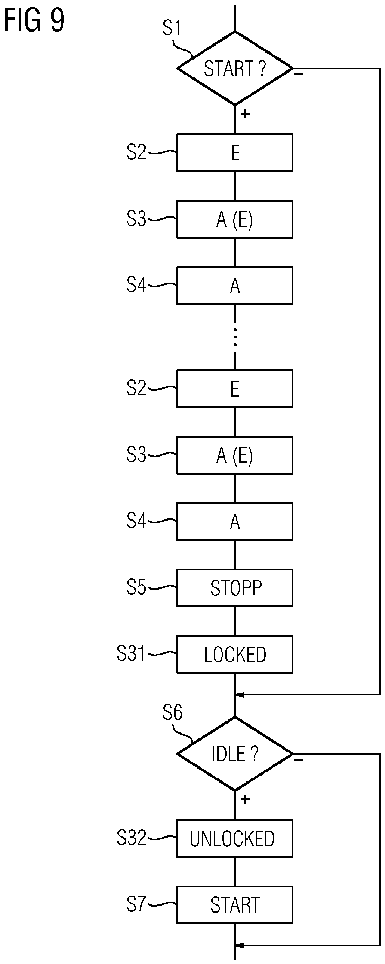

Im Rahmen der bisher erläuterten Vorgehensweise sind die Prozessorkerne 3a, 3b permanent für die Ausführung einer getriggerten Task 7b bis 7f freigeschaltet. Nachfolgend wird in Verbindung mit den FIG 9 bis 12 eine Modifikation dieser Vorgehensweise erläutert, bei der die Prozessorkerne 3a, 3b nur temporär für die Ausführung einer getriggerten Task 7b bis 7f freigeschaltet sind.

FIG 9 ist eine Modifikation der Vorgehensweise von FIG 4. Die Modifikation zeigt auch die Umgestaltung, die erforderlich ist, um die Vorgehensweise von FIG 4 in den Ablauf gemäß FIG 8 einzubinden.

Die Vorgehensweise von FIG 9 umfasst die Schritte S1 bis S7 von FIG 4. Die Schritte S1 bis S7 werden daher nicht nochmals erläutert. Zusätzlich sind bei der Vorgehensweise von FIG 9 jedoch Schritte S31 und S32 vorhanden. Der Schritt S31 ist dem Schritt S5 vor- oder nachgeordnet. Im Schritt S31 setzt der erste Prozessorkern 3a die Freischaltung für die Ausführung von getriggerten Tasks 7b bis 7f auf LOCKED (für gesperrt). Im Schritt S31 sperrt der erste Prozessorkern 3a somit die Prozessorkerne 3a, 3b für die Ausführung der getriggerten Tasks 7b bis 7f. Aufgrund der Anordnung des Schrittes S31 erfolgt das Sperren mit dem Abschluss des jeweiligen Zyklus der Basistask 7a. Der Schritt S32 ist dem Schritt S7 vor- oder nachgeordnet. Im Schritt S32 setzt der erste Prozessorkern 3a die Freischaltung für die Ausführung von getriggerten Tasks 7b bis 7f auf UNLOCKED (für freigegeben). Im Schritt S32 gibt der erste Prozessorkern 3a die Prozessorkerne 3 wieder für die Ausführung der getriggerten Tasks 7b bis 7f frei. Aufgrund der Anordnung des Schrittes S32 erfolgt das Freigeben mit dem Starten des jeweils nachfolgenden Zyklus der Basistask 7a. Die Sperre bzw. die Freigabe gilt für alle Prozessorkerne 3, also sowohl für den ersten Prozessorkern 3a als auch für den zweiten Prozessorkern 3b.

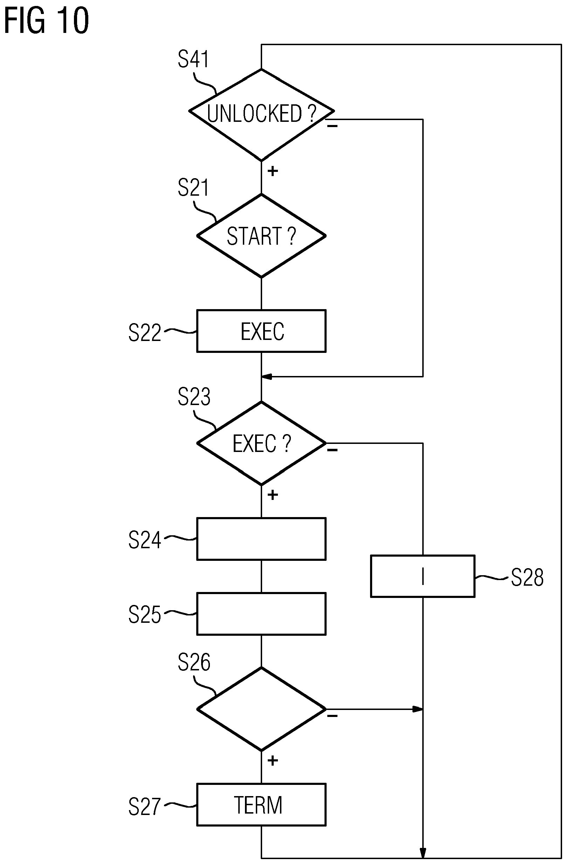

FIG 10 ist eine Modifikation der Vorgehensweise von FIG 8. Sie ist gültig für den zweiten Prozessorkern 3b.

Auch die Vorgehensweise von FIG 10 umfasst die Schritte S21 bis S28 von FIG 8. Die Schritte S21 bis S28 werden daher nicht nochmals erläutert. Zusätzlich ist jedoch ein Schritt S41 vorhanden. Im Schritt S41 prüft der zweite Prozessorkern 3b, ob er für die Ausführung von getriggerten Tasks 7b bis 7f gesperrt ist. Wenn dies nicht der Fall ist, ist der zweite Prozessorkern 3b für die Ausführung von getriggerten Tasks 7b bis 7f freigeschaltet. In diesem Fall geht der zweite Prozessorkern 3b zum Schritt S21 über. Wenn dies hingegen der Fall ist, der zweite Prozessorkern 3b also für die Ausführung von getriggerten Tasks 7b bis 7f gesperrt ist, geht der zweite Prozessorkern 3b direkt zum Schritt S23 über. Durch den Schritt S41 wird erreicht, dass der zweite Prozessorkern 3b zwar diejenigen getriggerten Tasks 7b bis 7f, deren Sollausführungszustand auf EXEC gesetzt ist und die sich demzufolge bereits in Ausführung befinden, weiter ausführt und abschließt. Hingegen kann der zweite Prozessorkern 3a aufgrund des Überspringens der Schritte S21 und S22 keine neue getriggerte Task 7b bis 7f mehr starten.

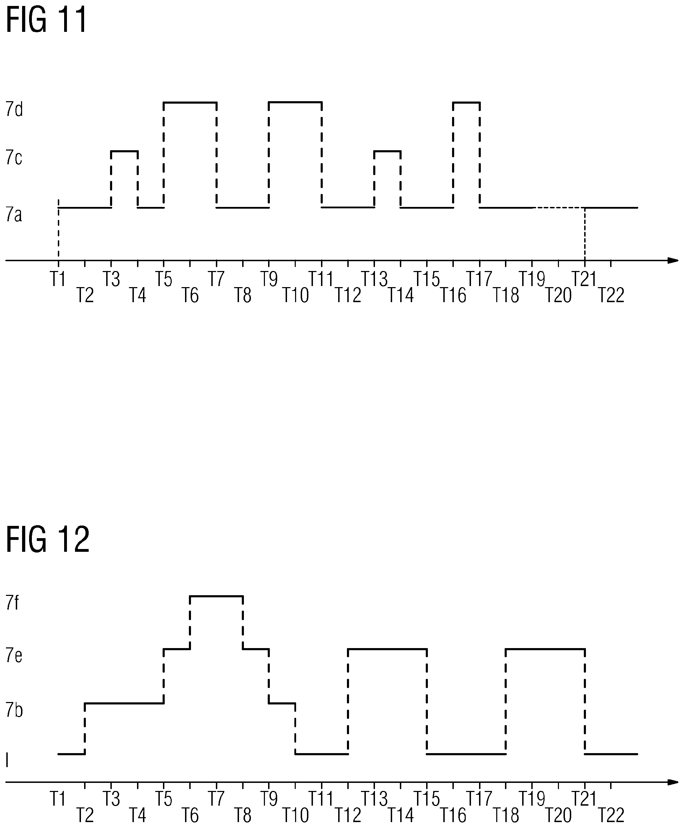

Die Wirkung dieser modifizierten Vorgehensweise wird nachfolgend in Verbindung mit den FIG 11 und 12 näher erläutert.

Die FIG 11 und 12 sind Modifikationen der FIG 6 und 7. Bezüglich der Vorgehensweisen zu den Zeitpunkten T1 bis T18 wird auf die obigen Ausführungen zu den FIG 6 und 7 verwiesen.

Wie zuvor ist zum Zeitpunkt T19 die Ausführung des jeweiligen Zyklus der Basistask 7a beendet. Ab diesem Zeitpunkt prüft der erste Prozessorkern 3a wie zuvor fortlaufend, ob der zweite Prozessorkern 3b sich in der Leerlauftask I befindet. Diese Prüfung entspricht dem Schritt S6 von FIG 9. Zusätzlich sperrt der erste Prozessorkern 3a zum Zeitpunkt T19 jedoch die Ausführung von getriggerten Tasks 7b bis 7f, deren Startbedingung neu eintritt. Im Ergebnis führt daher der zweite Prozessorkern 3b zwar weiterhin die getriggerte Task 7e aus. Wenn zum Zeitpunkt T20 die Startbedingung für die getriggerte Task 7d eintritt, beginnt der erste Prozessorkern 3a jedoch nicht mit der Ausführung der getriggerten Task 7d. Vielmehr wartet der erste Prozessorkern 3a weiter den Übergang des zweiten Prozessorkerns 3b in die Leerlauftask I ab. Wenn dies zum Zeitpunkt T21 der Fall ist, der zweite Prozessorkern 3b also die Ausführung der Leerlauftask I wieder aufnimmt, startet der erste Prozessorkern 3a die Ausführung des nächsten Zyklus der Basistask 7a. Weiterhin gibt der erste Prozessorkern 3a aufgrund der Ausführung des Schrittes S32 die Prozessorkerne 3a, 3b wieder zur Ausführung der getriggerten Tasks 7b bis 7f frei.

Durch die Modifikation der FIG 9 bis 12 wird erreicht, dass der nächste Zykluskontrollpunkt nicht erst der Zeitpunkt T22 ist, sondern bereits der Zeitpunkt T21. Die Zykluszeit wird also verkürzt.

Es ist möglich, dass der erste Prozessorkern 3a sich merkt, dass zum Zeitpunkt T20 die Startbedingung für die getriggerte Task 7d eingetreten ist. In diesem Fall führt der erste Prozessorkern 3a ab dem Zeitpunkt T21 nicht die Basistask 7a aus, sondern die getriggerte Task 7d. Dies ist jedoch von untergeordneter Bedeutung. Entscheidend ist, dass aufgrund der Modifikation das Starten des nächsten Zyklus der Basistask 7a bereits zum Zeitpunkt T21 erfolgt.

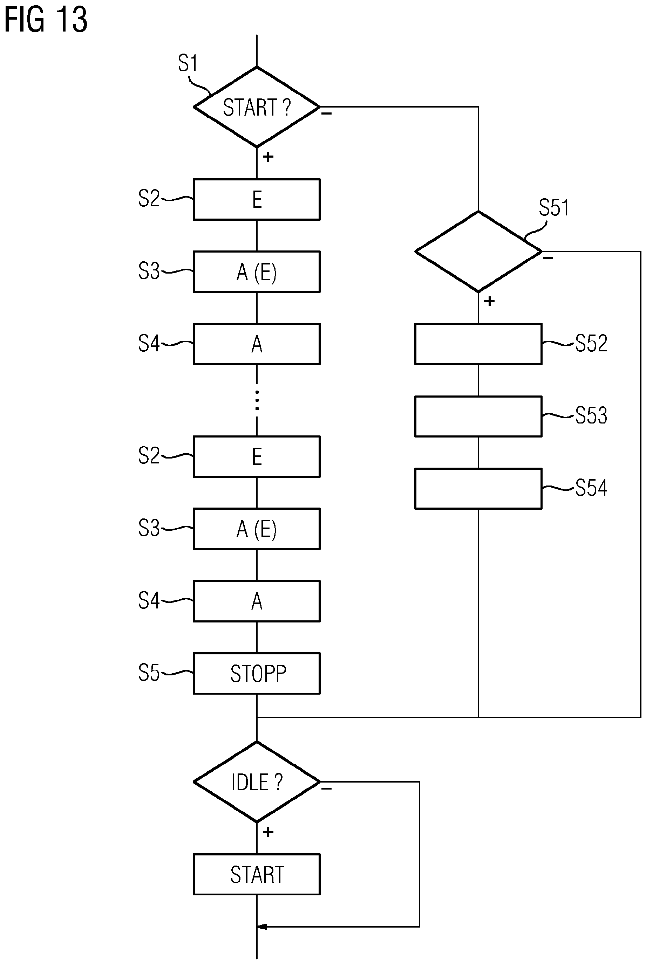

Es ist weiterhin möglich, die Vorgehensweise von FIG 4 entsprechend FIG 13 zu ergänzen. Die Ergänzung von FIG 13 ist auch in Verbindung mit der Ausgestaltung gemäß FIG 9 möglich.

Gemäß FIG 13 sind zusätzlich Schritte S51 bis S54 vorhanden. Die Schritte S51 bis S54 werden ausgeführt, wenn ein jeweiliger Zyklus der Basistask 7a bereits abgeschlossen ist, der jeweils nachfolgende Zyklus der Basistask 7a aber noch nicht gestartet ist, im Ergebnis also im NEIN-Zweig des Schrittes S1.

Im Schritt S51 prüft der erste Prozessorkern 3a, ob ein Wechsel von getriggerten Tasks 7b bis 7f erfolgen soll. Wenn dies nicht der Fall ist, überspringt der erste Prozessorkern 3a die Schritte S52 bis S54. Anderenfalls lädt der erste Prozessorkern 3a im Schritt S52 den Programmcode für neu auszuführende getriggerte Tasks 7b bis 7f nach. Im Schritt S53 nimmt der erste Prozessorkern 3a, soweit erforderlich, eine Initialisierung der nachgeladenen getriggerten Tasks 7b bis 7f vor. Im Schritt S52 entfernt der erste Prozessorkern 3a getriggerte Tasks 7b bis 7f, die nicht mehr ausgeführt werden sollen. Im Ergebnis führt der erste Prozessorkern 3a in den Schritten S52 bis S54 somit den Wechsel der getriggerten Tasks 7b bis 7f durch. Das Laden des Schrittes S52 und das Initialisieren des Schrittes S53 können hierbei nach und nach erfolgen, sofern gewährleistet wird, dass die neu auszuführende getriggerte Task 7b bis 7f noch nicht aktiviert sind. Sie werden also sozusagen zwar "scharf gemacht", aber noch nicht "gezündet". Das Entfernen des Schrittes S54 kann in ähnlicher Weise schrittweise erfolgen, nämlich dadurch, dass die jeweilige getriggerte Task 7b bis 7f zunächst deaktiviert bzw. gesperrt wird und erst danach entfernt wird.

Die Schritte S51 bis S54 können in ähnlicher Weise auch durch den zweiten Prozessorkern 3b realisiert werden, beispielsweise im Rahmen der Leerlauftask I.

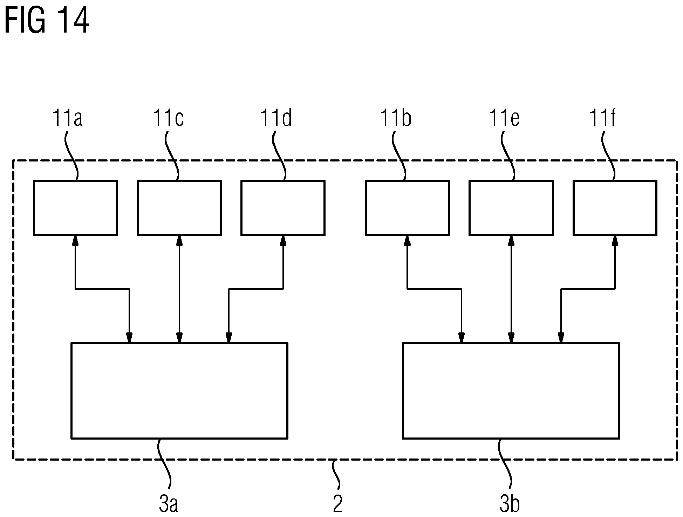

Prinzipiell können die verschiedenen Tasks 7a bis 7f mit globalen Daten arbeiten (data sharing). Vorzugsweise speichern die Prozessorkerne 3a, 3b jedoch entsprechend der Darstellung in FIG 14 die Daten für die verschiedenen Tasks 7a bis 7f in voneinander verschiedenen Speicherbereichen 11a bis 11f und damit unabhängig von den Daten der jeweils anderen Tasks 7a bis 7f. Vorzugsweise gilt dies zumindest für diejenigen Daten der Tasks 7a bis 7f, welche die Prozessorkerne 3a, 3b im Rahmen der Ausführung des jeweiligen Task 7a bis 7f selbst ermitteln, und diejenigen Daten A, A', welche die Prozessorkerne 3a, 3b im Rahmen der Ausführung des jeweiligen Task 7a bis 7f an den industriellen technischen Prozess 1 ausgeben. Besonders bevorzugt gilt dies auch für die jeweiligen Eingangsdaten E, E'. Je unabhängiger die einzelnen Tasks 7a bis 7f bezüglich ihrer Daten voneinander sind, desto stärker wirkt sich auch die parallele Ausführung der Tasks 7a bis 7f auf den verschiedenen Prozessorkernen 3a, 3b auf die Zykluszeit aus.

Zusammengefasst betrifft die vorliegende Erfindung somit folgenden Sachverhalt:
Eine Steuereinrichtung 2 steuert und kontrolliert einen industriellen technischen Prozess 1. Die zugehörige Steueraufgabe 6 weist Tasks 7 auf, denen Prioritäten zugeordnet sind. Eine Task 7a ist eine zyklisch ausgeführte Basistask 7a. Die anderen Tasks 7b bis 7f sind getriggerte Tasks 7b bis 7f, die bei Eintreten einer jeweiligen Startbedingung jeweils einmal ausgeführt werden. Die Steuereinrichtung 2 nimmt im Rahmen eines jeweiligen Zyklus der Basistask 7a Eingangsdaten E des industriellen technischen Prozesses 1 entgegen, ermittelt unter deren Verwertung Basis-Ausgangsdaten A und gibt diese an den industriellen technischen Prozess 1 aus. Die Steuereinrichtung 2 ermittelt im Rahmen der getriggerten Prozesse 7b bis 7f mit oder ohne Entgegennahme von Eingangsdaten E' des industriellen technischen Prozesses 1 Zusatz-Ausgangsdaten A' und gibt sie an den industriellen technischen Prozess 1 aus. Die Tasks 7 werden auf mehrere Prozessorkerne 3 der Steuereinrichtung 2 verteilt. Die Prozessorkerne 3 prüfen ab dem Starten eines Zyklus der Basistask 7a jeweils, ob mindestens eine von ihnen ausführbare getriggerte Task 7b bis 7f zur Ausführung freigegeben ist. Je nach Ergebnis der Prüfung führen sie eine von ihnen ausführbare getriggerte Task 7b bis 7f, den jeweiligen Zyklus der Basistask 7a oder keine Task 7 aus. Der die Basistask 7a ausführende Prozessorkern 3a unterbricht die Ausführung der Basistask 7a mit dem Abschluss des jeweiligen Zyklus der Basistask 7a, bis alle anderen Prozessorkerne 3b keine getriggerte Task 7b bis 7f mehr ausführen. Erst dann startet er die Ausführung des nächsten Zyklus der Basistask 7a.

Die vorliegende Erfindung weist viele Vorteile auf. Insbesondere kann der Ablauf der Steueraufgabe 6 vom Prinzip her gegenüber der Ausführung der Steueraufgabe 6 mittels einer Steuereinrichtung 2, die nur einen einzigen Prozessorkern 3 aufweist, unverändert beibehalten werden. Insbesondere bleibt die Struktur mit Zykluskontrollpunkten erhalten, so wie sie für Steuereinrichtungen 2 mit nur einem einzigen Prozessorkern 3 bekannt ist. Dennoch ist eine parallele Ausführung der verschiedenen Tasks 7 möglich. Die erfindungsgemäße Vorgehensweise ist transparent. Insbesondere muss die Steueraufgabe 6 in keiner Weise modifiziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: industrieller technischer Prozess
- 2: Steuereinrichtung
- 3, 3a, 3b: Prozessorkerne
- 4: Steuerprogramm
- 5: Maschinencode
- 6: Steueraufgabe
- 7, 7a bis 7f: Tasks
- 8: Sensoreinrichtungen
- 9: Peripherieeinheiten
- 10: Aktoreinrichtungen
- 11a bis 11f: Speicherbereiche
- A, A': Ausgangsdaten
- E, E': Eingangsdaten
- I: Leerlaufprozess
- S1 bis S54: Schritte
- T1 bis T22: Zeitpunkte

## Patentansprüche

1. Steuerverfahren für einen industriellen technischen Prozess (1),
- wobei eine Steuereinrichtung (2) für den industriellen technischen Prozess (1) den industriellen technischen Prozess (1) gemäß einer Steueraufgabe (6) steuert und kontrolliert,
- wobei die Steueraufgabe (6) mehrere Tasks (7) aufweist, denen jeweils eine Priorität zugeordnet ist,
- wobei eine der Tasks (7) eine Basistask (7a) und die anderen Tasks (7b bis 7f) getriggerte Tasks (7b bis 7f) sind,
- wobei die Basistask (7a) zyklisch ausgeführt wird und die getriggerten Tasks (7b bis 7f) aufgrund des Eintretens einer jeweiligen Startbedingung jeweils zur einmaligen Ausführung freigegeben werden und danach jeweils einmal ausgeführt werden,
- wobei die Steuereinrichtung (2) im Rahmen eines jeweiligen Zyklus der Basistask (7a) Eingangsdaten (E) des industriellen technischen Prozesses (1) entgegennimmt, unter Verwertung der Eingangsdaten (E) Basis-Ausgangsdaten (A) für den industriellen technischen Prozess (1) ermittelt und die Basis-Ausgangsdaten (A) an den industriellen technischen Prozess (1) ausgibt,
- wobei die Steuereinrichtung (2) im Rahmen der getriggerten Tasks (7b bis 7f) mit oder ohne Entgegennahme von Eingangsdaten (E') des industriellen technischen Prozesses (1) Zusatz-Ausgangsdaten (A') für den industriellen technischen Prozess (1) ermittelt und die Zusatz-Ausgangsdaten (A') an den industriellen technischen Prozess (1) ausgibt,
**dadurch gekennzeichnet,**
- **dass** die Tasks (7) auf mehrere Prozessorkerne (3) der Steuereinrichtung (2) verteilt werden,
- **dass** die Prozessorkerne (3) ab dem Starten eines Zyklus der Basistask (7a), sofern sie für die Ausführung einer getriggerten Task (7b bis 7f) freigeschaltet sind, jeweils prüfen, ob mindestens eine von ihnen ausführbare getriggerte Task (7b bis 7f) zur Ausführung freigegeben ist,
- **dass** die Prozessorkerne (3), sofern dies der Fall ist, eine von ihnen ausführbare getriggerte Task (7b bis 7f) ausführen und anderenfalls den jeweiligen Zyklus der Basistask (7a) oder keine Task (7) und
- **dass** der die Basistask (7a) ausführende Prozessorkern (3a) die Ausführung der Basistask (7a) mit dem Abschluss des jeweiligen Zyklus der Basistask (7a) unterbricht, bis alle anderen Prozessorkerne (3b) keine getriggerte Task (7b bis 7f) mehr ausführen, und erst dann die Ausführung des nächsten Zyklus der Basistask (7a) startet.

2. Steuerverfahren nach Anspruch 1,
**dadurch gekennzeichnet,**
**dass** entweder die Tasks (7) dem jeweiligen Prozessorkern (3) statisch zugeordnet sind oder die Tasks (7) dem jeweiligen Prozessorkern (3) dynamisch zugeordnet werden.

3. Steuerverfahren nach Anspruch 1 oder 2,
**dadurch gekennzeichnet,**
**dass** die Prozessorkerne (3) für die Ausführung einer getriggerten Task (7b bis 7f) permanent freigeschaltet sind.

4. Steuerverfahren nach Anspruch 1 oder 2,
**dadurch gekennzeichnet,**
**dass** der den jeweiligen Zyklus der Basistask (7a) ausführende Prozessorkern (3a) mit dem Abschluss des jeweiligen Zyklus der Basistask (7a) die Prozessorkerne (3) für die Ausführung der getriggerten Tasks (7b bis 7f) sperrt, so dass die anderen Prozessorkerne (3b) zwar bereits in Ausführung befindliche getriggerte Tasks (7b bis 7f) weiter ausführen und abschließen, aber keine neue getriggerte Task (7b bis 7f) mehr starten, und die Prozessorkerne (3) mit dem Starten des jeweils nachfolgenden Zyklus der Basistask (7a) wieder für die Ausführung der getriggerten Tasks (7b bis 7f) freigibt.

5. Steuerverfahren nach einem der obigen Ansprüche,
**dadurch gekennzeichnet,**
**dass** die jeweilige Startbedingung für die getriggerten Tasks (7b bis 7f) ein Zeitablauf oder ein zeitunabhängiges Ereignis des industriellen technischen Prozesses (1) ist.

6. Steuerverfahren nach einem der obigen Ansprüche,
**dadurch gekennzeichnet,**
**dass** mindestens einer der Prozessorkerne (3) zwischen dem Abschluss eines jeweiligen Zyklus der Basistask (7a) und dem Starten des jeweils nachfolgenden Zyklus der Basistask (7a) prüft, ob ein Wechsel von getriggerten Tasks (7b bis 7f) erfolgen soll, bejahendenfalls den Wechsel durchführt und verneinendenfalls keinen Wechsel durchführt.

7. Steuerverfahren nach einem der obigen Ansprüche,
**dadurch gekennzeichnet,**
**dass** die Prozessorkerne (3) zumindest diejenigen Daten (A, A') der Tasks (7), welche sie im Rahmen der Ausführung des jeweiligen Task (7) selbst ermitteln und an den industriellen technischen Prozess (1) ausgeben, unabhängig von den Daten (A, A') der anderen Tasks (7) speichern.

8. Steuerverfahren nach einem der obigen Ansprüche,
**dadurch gekennzeichnet,**
**dass** die Prozessorkerne (3) ab dem Starten eines Zyklus der Basistask (7a), sofern mehrere von ihnen ausführbare getriggerte Tasks (7b bis 7f) zur Ausführung freigegeben sind, die von ihnen ausführbare getriggerte Task (7b bis 7f) mit der höchsten Priorität ausführen.

9. Steuerprogramm für eine mehrere Prozessorkerne (3) aufweisende Steuereinrichtung (2) für einen industriellen technischen Prozess (1), wobei das Steuerprogramm Maschinencode (5) umfasst, der von den Prozessorkernen (3) der Steuereinrichtung (2) abarbeitbar ist, wobei die Abarbeitung des Maschinencodes (5) durch die Prozessorkerne (3) der Steuereinrichtung (2) bewirkt, dass die Prozessorkerne (3) gemeinsam ein Steuerverfahren nach einem der obigen Ansprüche ausführen.

10. Steuereinrichtung für einen industriellen technischen Prozess (1),
- wobei die Steuereinrichtung mehrere Prozessorkerne (3) aufweist,
- wobei die Steuereinrichtung mit einem Steuerprogramm (4) nach Anspruch 9 programmiert ist, so dass die Prozessorkerne (3) der Steuereinrichtung im Betrieb der Steuereinrichtung gemeinsam ein Steuerverfahren nach einem der Ansprüche 1 bis 8 ausführen.
